# EUROPÄISCHE PATENTANMELDUNG

(11) **EP 4 456 352 A1**
(43) Veröffentlichungstag der Anmeldung: **30.10.2024**
(21) Anmeldenummer: 23170047.7
(22) Anmeldetag: 26.04.2023
(51) Int. Cl.: H02G 3/22, F16L 3/223, H01B 17/30

(54) **KABELABSTANDHALTEELEMENT ZUR POSITIONIERUNG MEHRERER ELEKTRISCHER LEITUNGEN**

(71) Anmelder: Hilti Aktiengesellschaft, 9494 Schaan (LI)
(72) Erfinder: Utecht, Jörg, 86916 Kaufering (DE); Topp, Silke, 86916 Kaufering (DE)
(74) Vertreter: Hilti Aktiengesellschaft Corporate Intellectual Property

(57) **Zusammenfassung**

Die Erfindung betrifft ein Kabelabstandhalteelement (1) zur benachbarten Positionierung mehrerer ummantelter elektrischer Leitungen (10a, 10b, 10c) zueinander sowie gegenüber einer diese umgebenden Öffnung (100; 100'), wobei mehrere der Anzahl der zu positionierenden elektrischen Leitungen (10a, 10b, 10c) entsprechende Halteschenkel (2a, 2b, 2c), die sich je von einer Mittelachse (X) aus nach radial außen erstrecken und mit dem jeweiligen distalen Ende zur Abstützung gegenüber der Öffnung (100) vorgesehen sind, wobei der Bereich zwischen benachbarten Halteschenkeln (2a, 2b, 2c) zur zumindest teilweise formschlüssigen Aufnahme der elektrischen Leitungen (10a, 10b, 10c) ausgebildet ist.

## Beschreibung

Die Erfindung betrifft ein Kabelabstandhalteelement zur benachbarten Positionierung mehrerer ummantelter elektrischer Leitungen zueinander sowie gegenüber einer diese umgebenden Öffnung. Außerdem betrifft die Erfindung auch eine Kabelhalteanordnung unter Verwendung eines solchen Kabelabstandhalteelements.

Das Einsatzgebiet der Erfindung erstreckt sich vornehmlich auf die Elektroinstallationstechnik. Beispielsweise ist es bei der Installation von Hausanschlüssen erforderlich, mehrere ummantelte Stromkabel durch eine Wanddurchführung eines Gebäudes hindurch zu einem Hauptanschlusskasten oder dergleichen zu verlegen. Im Falle der Installation von 3-Phasen-Wechselstrom sind speziell drei ummantelte elektrische Leitungen durch den eine Öffnung bildenden Wanddurchbruch in das Gebäude zu führen. Dabei sollten diese Niederspannungsleitungen aus Sicherheitsgründen nicht mit dem die Öffnung umgebenden Betonmaterial sowie möglichst auch nicht untereinander in Berührung kommen. Denn an der Engstelle einer solchen Öffnung kann es infolge von unachtsamer Montage oder Wechselbeanspruchungen in Längsrichtung zu einer Beschädigung der elektrisch isolierenden Ummantelung kommen. Um dies zu verhindern, kommt eine Kabelhalteanordnung der hier interessierenden Art zum Einsatz, welche eine Beschädigung elektrisch ummantelter Leitungen verhindert. Daneben lässt sich die erfindungsgemäße Lösung auch bei anderen Öffnungen anwenden, welche beispielsweise durch Rohrleitungen oder dergleichen gebildet werden können.

### Stand der Technik

Aus der DE 23 36 280 A1 geht eine technische Lösung zur Wanddurchführung von Leitungen, Kabeln oder dergleichen hervor, welche einen Deckel mit angeformten Führungsstutzen zum Hindurchführen der Kabel, Leitungen oder dergleichen verfügt. Das Anschlussstück ist auswechselbar und lösbar dicht durch Einmauern oder Einformen in eine Wanddurchführung einsetzbar. Die Anzahl der Führungsstutzen entspricht der Anzahl der hindurchzuführenden Kabel, Leitungen oder dergleichen.

Zwar lässt sich hiermit eine beschädigungsfreie Wanddurchführung von elektrischen Leitungen und dergleichen herstellen; eine Montage oder Demontage ist jedoch nicht ohne weitere Hilfsmittel - wie beispielsweise Schlauchschellen oder dergleichen - möglich.

Es ist die Aufgabe der vorliegenden Erfindung, ein Kabelabstandhalteelement der gattungsgemäßen Art dahingehend weiter zu verbessern, dass eine einfach zu montierende beschädigungsfreie Positionierung mehrerer ummantelter elektrischer Leitungen zueinander und insbesondere gegenüber einer diese umgebenden Öffnung gewährleistet ist.

### Offenbarung der Erfindung

Die Aufgabe wird ausgehend von einem Kabelabstandhalteelement gemäß dem Oberbegriff von Anspruch 1 in Verbindung mit dessen kennzeichnenden Merkmalen gelöst. Der nebengeordnete Anspruch 9 gibt als spezielle Anwendung eine Kabelhalteanordnung unter Verwendung mindestens eines solchen Kabelabstandhalteelements an.

Die Erfindung schließt die technische Lehre ein, dass ein Kabelabstandhalteelement mehrere der Anzahl der zu positionierenden elektrischen Leitungen entsprechende Halteschenkel aufweist, welche sich je von einer Mittelachse X aus im Wesentlichen nach radial außen erstrecken und mit dem jeweiligen distalen Ende zur Abstützung gegenüber einer vorzugsweise runden Öffnung vorgesehen sind, wobei der Bereich zwischen benachbarten Halteschenkeln zur zumindest teilweise formschlüssigen Aufnahme oder Einlage der elektrischen Leitungen ausgebildet ist.

Ein derartiges Kabelabstandhalteelement lässt sich in einfacher Weise durch Einsetzen oder Einpressen in eine vorzugsweise zylindrische Öffnung eines Wanddurchbruchs, einer Rohrleitung oder dergleichen montieren, indem zunächst die elektrischen Leitungen in den Bereich zwischen den benachbarten Halteschenkeln eingelegt werden. Im montierten Zustand berühren sich die elektrischen Leitungen zumindest im Nahbereich des Kabelabstandhalteelements nicht mehr gegenseitig. Unter Zuhilfenahme eines einfachen, die elektrischen Leitungen bündelnden Kabelbinders kann optional auch eine Berührung am Innenwandbereich der Öffnung vermieden werden. Bevorzugt ist das Kabelabstandshalteelement nicht aus einem Vollmaterial sondern radial innen hohl ausgeführt. Hierdurch ist ein Toleranzausgleich bei einer Einführung in die vorzugsweise zylindrische Öffnung einfach möglich. Das Kabelabstandshalteelement kann beispielsweise in einem 3D-Druckverfahren hergestellt sein.

Gemäß einer bevorzugten Ausführungsform ist der Bereich zwischen benachbarten Halteschenkeln jeweils als zumindest halbkreisförmigen Einlegekontur ausgebildet, deren Außenradius R in etwa dem Radius der zugeordneten elektrischen Leitung entspricht. Da elektrische Leitungen, insbesondere Niederspannungsleitungen für Hausanschlüsse, hinsichtlich des Außendurchmessers, also auch des Außenradius, genormt sind, lassen sich hierzu passende Kabelabstandhalteelemente anfertigen, welche eine exakte Positionierung sicherstellen. Dabei ist es denkbar, dass eine einen Halbkreis geringfügig überschreitende Einlegekontur ein formschlüssiges Einclipsen der zugeordneten elektrischen Leitungen ermöglicht, was eventuell zusätzliche Kabelbinder zur öffnungsabstandswahrenden Bündelung entbehrlich macht. Davon abgesehen ist es natürlich auch denkbar, elektrische Leitungen geringeren Durchmessers in Verbindung mit dem erfindungsgemäßen Kabelabstandhalteelement zu verwenden.

Gemäß einer weiteren, die Erfindung verbessernden Maßnahme wird vorgeschlagen, dass der distale Endbereich jedes Halteschenkels einen entfernbaren radialen Verlängerungsabschnitt zur Anpassung an verschiedene Öffnungsweiten umfasst. Ein solcher radialer Verlängerungsabschnitt ist vorzugsweise über mindestens einen Abbrechsteg einstückig am zugeordneten Halteschenkel angeformt. Ein solcher Abbrechsteg kann beispielsweise über eine Materialverjüngung im Übergangsbereich zwischen dem Hauptkörper eines Halteschenkels und dem radialen Verlängerungsabschnitt erzeugt werden.

Zur bevorzugten Anwendung im Bereich von elektrischen Gebäudeinstallationen kann das erfindungsgemäße Kabelabstandhalteelement durch derartige Verlängerungsabschnitte derart variabel angepasst werden, dass dieses mit den Verlängerungsabschnitten beispielsweise in eine kreisförmige DN-200-Öffnung passt und bei entfernten Verlängerungsabschnitten beispielsweise in eine kreisförmige DN-150-Öffnung einlegbar oder einpressbar ist. Hierdurch lassen sich verschieden standardisierte Nenndurchmesser (DN) im Baubereich abdecken, ohne dass hierfür separate Kabelabstandhalteelemente bereitgestellt werden müssten.

Vorzugsweise ist das erfindungsgemäße Kabelabstandhalteelement mit genau drei Halteschenkeln ausgestattet, um über die entsprechend drei Zwischenbereiche drei elektrische Leitungen einer 3-Phasen-Wechselstrom-Installation aufzunehmen.

Vorzugsweise sind die erfindungsgemäßen Kabelabstandhalteelemente in den vorstehend erläuterten Varianten aus einem hitzebeständigen, elektrisch isolierten Kunststoffmaterial bestehend als Spritzgussteil hergestellt, wobei der Kunststoff vorzugsweise ausgewählt ist aus einer Polymermaterialgruppe, umfassend Polypropylen (PP), Polyamid (PA), Polyethylen (EP), Polyoxymethylen (POM).

Gemäß einer weiteren die Erfindung verbessernden Maßnahme wird vorgeschlagen, dass der Abschnitt der Halteschenkel und/oder die hieran angeformten Verlängerungsabschnitte jeweils flankenseitige Materialausnehmungsbereiche aufweisen. Hierdurch kann insbesondere bei spritzgießtechnischer Herstellung Kunststoffmaterial eingespart werden. Die verbleibenden Wandungsbereiche sind dabei so dimensioniert, dass dies nicht zulasten der Stabilität des Kabelabstandhalteelements geht. Die Materialausnehmungen können auch durchgängig ausgebildet sein.

Zumindest stabilisierende Verstrebungen sind in diesem Falle jedoch vorzusehen, um die Formstabilität zu gewährleisten.

Vorzugsweise ist wenigstens ein Befestigungselement vorgesehen, welches umfangsseitig mit den flankenseitigen Materialausnehmungsbereichen in Wirkverbindung bringbar ist. Hierdurch ist eine Bewegungsmöglichkeit von kleineren Kabeln vorteilhafterweise reduziert. Das Befestigungselement ist vorzugsweise als Kabelbinder oder dergleichen ausgeführt, der umfangsseitig mit sämtliche Materialausnehmungsbereichen in Wirkverbindung bringbar ist und einen Bewegungsraum von in Wirkverbindung mit dem Kabelabstandshalteelement gebrachten Kabeln oder Leitungen reduziert.

Mit dem vorstehend beschriebenen erfindungsgemäßen Kabelabstandhalteelement lassen sich Kabelhalteanordnungen zum Hindurchführen von vorzugsweise drei ummantelten elektrischen Leitungen durch eine Öffnung einer diese umgebenden Tragstruktur bilden. Vorzugsweise weist die Öffnung einen runden Querschnitt auf und die Mittelachse der vorzugsweise rotationssymmetrischen Kabelhalteanordnung verläuft koaxial zur Öffnung. Wie bereits vorstehend erwähnt, kann die Öffnung beispielsweise durch eine Wandbohrung eines Bauwerks oder durch eine Rohrleitung einer Elektroinstallation gebildet sein.

### Detailbeschreibung anhand Zeichnung

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Fig. 1: eine perspektivische Ansicht eines Kabelabstandhalteelements für drei elektrische Leitungen,
- Fig. 2: eine Seitenansicht des Kabelabstandhalteelements nach Fig. 1,
- Fig. 3: eine Seitenansicht einer ein Kabelabstandhalteelement nach Fig. 1 und 2 umfassenden Kabelhalteanordnung in einem ersten Anwendungsbeispiel, und
- Fig. 4: eine Seitenansicht einer ein Kabelabstandhalteelement nach Fig. 1 und 2 umfassenden Kabelhalteanordnung in einem zweiten Anwendungsbeispiel.

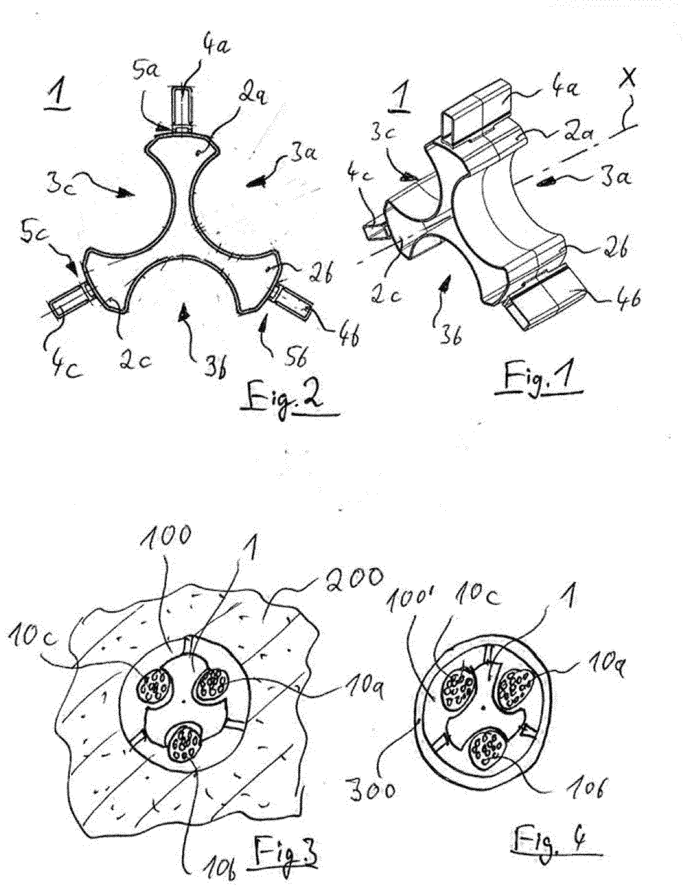

Gemäß Fig. 1 ist ein Kabelabstandhalteelement 1 als ein aus einem Kunststoffmaterial bestehendes Spritzgussteil mit rotationssymmetrischer Gestalt um eine Mittelachse X ausgebildet. Vom Bereich der Mittelachse X erstrecken sich drei Halteschenkel 2a bis 2c nach radial außen. Die Bereiche zwischen benachbarten Halteschenkeln 2a und 2b, 2b und 2c, 2c und 2a sind zur jeweiligen Aufnahme von - hier nicht weiter dargestellten - ummantelten elektrischen Leitungen vorgesehen und weisen eine hieran angepasste Einlegekontur 3a, 3b, 3c auf. Die Einlegekontur 3a, 3b, 3c ist bei diesem Ausführungsbeispiel halbkreisförmig ausgebildet und in etwa an den Außenradius eingelegter elektrischer Leitungen angepasst.

Ferner ist im distalen Endbereich jedes Halteschenkels 2a, 2b, 2c ein entfernbarer radialer Verlängerungsabschnitt 4a, 4b, 4c zur Anpassung an verschiedene Öffnungsweiten angeordnet. Bei diesem Beispiel lässt sich bei vorhandenen Verlängerungsabschnitten eine Anpassung an standardisierte DN-200-Öffnungen vornehmen, wohingegen bei entfernten Verlängerungsabschnitten eine Anpassung an standardisierte DN-150-Öffnungen ermöglicht wird.

Gemäß Fig. 2 ist jeder radiale Verlängerungsabschnitt 4a, 4b, 4c über einen je zugeordneten Abbrechsteg 5a, 5b, 5c einstückig am zugeordneten Halteschenkel 2a, 2b, 2c angeformt. Außerdem weist der Abschnitt der Halteschenkel 2a, 2b, 2c sowie auch die Verlängerungsabschnitte 4a, 4b, 4c jeweils flankenseitige Materialausnehmungsbereiche 6a, 6b, 6c zur Materialeinsparung auf.

Die Fig. 3 illustriert schematisch die Anordnung eines Kabelabstandhalteelements 1 innerhalb einer Öffnung 100 einer Tragstruktur, welche hier von einer Wand 200 eines - nicht weiter dargestellten - Bauwerks verläuft. Dem Kabelabstandhalteelement 1 sind drei ummantelte elektrische Leitungen 10a, 10b, 10c zugeordnet.

Die Fig. 4 zeigt dagegen eine von einer Rohrleitung 300 gebildete Öffnung 100`, in welche ein Kabelabstandhalteelement 1 angeordnet ist, um drei ummantelte elektrische Leitungen 10a, 10b, 10c unter Wahrung eines Wandabstands sowie eines jeweiligen Abstands zueinander zu führen. In die Rohrleitung 300 sind dabei mehrere Kabelabstandhalteelemente 1 beabstandet hintereinander vorgesehen.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, Öffnungen anderer Tragstrukturen mit erfindungsgemäßen Kabelabstandhalteelementen auszustatten, um eine benachbarte Positionierung mehrerer ummantelter elektrischer Leitungen vorzunehmen. Zusätzlich können die so positionierten elektrischen Leitungen mit Brandschutzblechen zwischen diesen und der Öffnung ausgestattet werden, um die Zwischenräume brandschutzsicher zu schließen.

### BEZUGSZEICHENLISTE

- 1: Kabelabstandhalteelement
- 2: Halteschenkel
- 3: Einlegekontur
- 4: Verlängerungsabschnitt
- 5: Abbrechsteg
- 6: Materialausnehmungsbereich

- 10: elektrische Leitung

- 100: Öffnung
- 200: Wand
- 300: Rohrleitung

- X: Mittelachse

## Patentansprüche

1. Kabelabstandhalteelement (1) zur benachbarten Positionierung mehrerer ummantelter elektrischer Leitungen (10a, 10b, 10c) zueinander sowie gegenüber einer diese umgebenden Öffnung (100; 100'),
**gekennzeichnet durch** mehrere der Anzahl der zu positionierenden elektrischen Leitungen (10a, 10b, 10c) entsprechende Halteschenkel (2a, 2b, 2c), die sich je von einer Mittelachse (X) aus nach radial außen erstrecken und mit dem jeweiligen distalen Ende zur Abstützung gegenüber der Öffnung (100) vorgesehen sind, wobei der Bereich zwischen benachbarten Halteschenkeln (2a, 2b, 2c) zur zumindest teilweise formschlüssigen Aufnahme der elektrischen Leitungen (10a, 10b, 10c) ausgebildet ist.

2. Kabelabstandhalteelement (1) nach Anspruch 1,
**dadurch gekennzeichnet, dass** der Bereich zwischen benachbarten Halteschenkeln (2a, 2b, 2c) jeweils als eine zumindest halbkreisförmige Einlegekontur (3a, 3b, 3c) ausgebildet ist, deren Außenradius (R) dem Radius der zugeordneten elektrischen Leitung (10a, 10b, 10c) entspricht.

3. Kabelabstandhalteelement (1) nach einem der Ansprüche 1 oder 2,
**dadurch gekennzeichnet, dass** der distale Endbereich jedes Halteschenkels (2a, 2b, 2c) einen entfernbaren radialen Verlängerungsabschnitt (4a, 4b, 4c) zur Anpassung an verschiedene Öffnungsweiten umfasst.

4. Kabelabstandhalteelement (1) nach Anspruch 3,
**dadurch gekennzeichnet, dass** dieses bei vorhandenen Verlängerungsabschnitten (4a, 4b, 4c) passend in eine kreisförmige DN-200-Öffnung und bei entfernten Verlängerungsabschnitten (4a, 4b, 4c) passend in eine kreisförmige DN-150-Öffnung einlegbar oder einpressbar ist.

5. Kabelabstandhalteelement (1) nach einem der Ansprüche 3 oder 4,
**dadurch gekennzeichnet, dass** jeder radiale Verlängerungsabschnitt (4a, 4b, 4c) über mindestens einen Abbrechsteg (5a, 5b, 5c) einstückig am zugeordneten Halteschenkel (2a, 2b, 2c) angeformt ist.

6. Kabelabstandhalteelement (1) nach einem der vorstehenden Ansprüche,
**dadurch gekennzeichnet, dass** dieses als ein aus einem hitzebeständigen, elektrisch isolierenden Kunststoff bestehendes Spritzgussteil ausgebildet ist, wobei der Kunststoff insbesondere ausgewählt ist aus einer Polymermaterialgruppe, umfassend Polypropylen (PP), Polyamid (PA), Polyethylen (EP), Polyoxymethylen (POM).

7. Kabelabstandhalteelement (1) nach einem der vorstehenden Ansprüche,
**dadurch gekennzeichnet, dass** der Abschnitt der Halteschenkel (2a, 2b, 2c) und/oder die Verlängerungsabschnitte (4a, 4b, 4c) jeweils flankenseitige Materialausnehmungsbereiche (6a, 6b, 6c) aufweisen.

8. Kabelabstandhalteelement (1) nach einem der vorstehenden Ansprüche,
**dadurch gekennzeichnet, dass** ein Befestigungselement vorgesehen ist, welches umfangsseitig mit den flankenseitigen Materialausnehmungsbereichen (6a, 6b, 6c) in Wirkverbindung bringbar ist.

9. Kabelhalteanordnung zum Hindurchführen mehrerer ummantelter elektrischer Leitungen (10a, 10b, 10c) durch eine Öffnung (100; 100`) einer diese umgebenden Tragstruktur mit mindestens einem Kabelabstandhalteelement (1) nach einem der vorstehenden Ansprüche, dessen Mittelachse (X) koaxial zur Öffnung (100; 100`) verläuft.

10. Kabelhalteanordnung nach Anspruch 9,
**dadurch gekennzeichnet, dass** die Öffnung (100; 100`) der Tragstruktur durch eine Wand (200) eines Bauwerks oder durch eine Rohrleitung (300) einer Elektroinstallation gebildet ist.

11. Kabelhalteanordnung nach einem der Ansprüche 9 oder 10,
**dadurch gekennzeichnet, dass** die ummantelte elektrische Leitung (10a, 10b, 10c) als eine Niederspannungsleitung ausgeführt ist.
